# EUROPEAN PATENT SPECIFICATION

(11) **EP 0 795 368 B1**
(45) Date of publication and mention of the grant of the patent: **11.07.2001**
(21) Application number: 97301601.7
(22) Date of filing: 11.03.1997
(51) Int. Cl.: B23B 51/00

(54) **Apparatus for drilling a hole having an undercut space**
Gerät zum Bohren eines Loches mit Hinterschnitt
Appareil à forer un trou avec chambrage

(30) Priority: 13.03.1996 JP 5582096
(43) Date of publication of application: 17.09.1997
(73) Proprietor: KABUSHIKI KAISHA MIYANAGA, Miki, Hyogo 673-04 (JP)
(72) Inventor: Miyanaga, Masaki, Hyogo 659 (JP)
(74) Representative: West, Alan Harry

(56) References cited:
- EP-A- 0 069 276
- EP-A- 0 395 335
- EP-A- 0 729 802
- DE-A- 2 921 696

## Description

The present invention relates to an apparatus, or a borer, for drilling a hole of predetermined depth in an object such as concrete and, at the same time, forming an undercut space or flared portion with enlarged diameter in the cylindrical wall of the hole at a deep position.

An anchor bolt can be planted in a drilled hole of predetermined depth in the object such as concrete, inserting into the hole a base portion of the bolt with an axially slitted sleeve which surrounds the bolt, and expanding the sleeve to create frictional resistance on the hole wall.

The pull- out resisting strength of the planted bolt depends greatly on the joining (bonding) strength between the expanded sleeve and the hole wall. It is therefore possible to largely increase the pull- out resisting strength by forming, in advance, an undercut conical space having enlarged diameter near the bottom of the hole for engagement with the expanded sleeve.

There are conventional methods and apparatuses for drilling a hole having an undercut space in concrete by a boring machine such as a hammer drill for drilling a straight hole of predetermined depth, and then forming an undercut space in the hole wall near the bottom.

The applicant's Japanese Patent Application No. Hei 7- 40131 (corresponding to European Patent Application EP-A-729 802) discloses an apparatus of this type comprising the features of the preamble of claim 1 for drilling a hole having an undercut space. This apparatus includes a basic member having an outer cylindrical surface and a coaxial shank at its rear end. A sleeve is supported in telescopic engagement with the outer surface of the basic member. The sleeve has an inner flange or an end wall at its front end. A drill spindle is fixed coaxially to the front end of the basic member, and extends through the sleeve flange. The spindle has an axial groove on its outer surface. The front end of the groove bottom slopes outward. An undercutter engages slidably with the groove, and has an undercutting edge at its front end. An annular member is positioned coaxially between the basic member and the sleeve flange, and between the cylindrical wall of the sleeve and the spindle. The annular member engages with the undercutter to move axially with it. A pull- up spring is interposed between the sleeve and the undercutter to bias the undercutter and the annular member rearward relative to the sleeve. An application force transmission mechanism links the sleeve and the annular member together.

After the sleeve flange comes into contact with a surface of an object being drilled, the sleeve stops forward movement, and the basic member continues forward movement. The forward movement of the basic member relative to the sleeve is converted by the application force transmission mechanism into forward movement of the undercutter relative to the spindle. This movement slides the undercutter and protrudes the undercutting edge outward from the sloped surface of the sloped groove bottom. The protruded undercutting edge cuts the cylindrical wall of the drilled hole to form an undercut space. It is therefore possible to form, continuously in one process, a drilled hole of predetermined depth in the object and, at the same time, an undercut space in the cylindrical wall of the drilled hole.

The application force transmission mechanism may include a train of balls put in an inverted U- shaped hole formed through the basic member. This hole has open ends at the front end of the basic member. The balls at both ends of the train abut on the rear ends of a pair of connecting rods respectively, which extend axially through the respective ends of the hole. One of the rods extends slidably through the annular member, and abuts at its front end on the sleeve flange. The other rod abuts at its front end on the annular member. If such a transmission mechanism is applied to a hammer drill with axial vibration, the balls may become bumpy or unstable in the U-shaped hole. In such a case, after the sleeve flange abuts on the surface of a body being drilled, it becomes difficult to accurately convert the forward movement of the basic member relative to the sleeve into forward movement of the undercutter relative to the spindle.

The present invention solves the foregoing problem with an apparatus comprising the features of claim 1. Such apparatus comprises an application force transmission mechanism including a cam supported by the basic member of a borer, in place of the balls in the U-shaped hole.

By providing a borer of the type mentioned above with an application force transmission mechanism including a cam, which can turn on an axis, it is possible to reduce the number of parts. It is also possible to reduce the backlash between parts, so that the forward movement of the basic member relative to the sleeve can be converted accurately into forward movement of the undercutter relative to the spindle.

An apparatus according to the present invention for drilling a hole having an undercut space includes a shank and a first circular member, which is fixed at its rear end coaxially to the shank. A stopper is fixed to the periphery of the first member. A sleeve engages telescopically with the first member. The sleeve has an axial slot in slidable engagement with the stopper. The sleeve also has an inner flange forward from the first member. A drill spindle is fixed coaxially to the front end of the first member, and extends through the sleeve flange. An undercutter engages with the side wall of the spindle slidably therealong through the sleeve flange. A second circular member is positioned coaxially between the first member and the sleeve flange, and between the cylindrical wall of the sleeve and the spindle. The annular member engages with the undercutter to axially move therewith. A spring is interposed between the sleeve and either the undercutter or the second member to bias the undercutter and the second member rearward. An application force transmission mechanism links the sleeve and the second member.

The transmission mechanism includes a pin fixed to the first member. The pin extends perpendicularly to the axis of the first member. The transmission mechanism also includes a cam supported rotatably by the pin. The cam has a pair of steps on both sides of the pin. The steps face in the same direction. The transmission mechanism further includes a first rod and a second rod. The first rod extends axially through the second member. The first rod abuts at its rear end on one of the cam steps, and at its front end on the sleeve flange. The second rod extends axially of the first member. The second rod abuts at its rear end on the other cam step, and at its front end on the second member.

During operation, the spindle fixed to the first member drills a hole in a body. When the sleeve flange has come into contact with the surface of the object being drilled, the sleeve stops forward movement, and the first member continues forward movement. The forward movement of the first member relative to the sleeve moves the first rod rearward, turns the cam and moves the second rod forward. The second rod then moves the second member together with the undercutter forward relatively to the spindle. Consequently, the undercutter can, always with the same stroke, form an undercut space in the cylindrical wall of the drilled hole at a deep position of the hole.

It is preferable to arrange or position a pair of such application force transmission mechanisms symmetrically with respect to the axis of the first member.

In other words, it is preferable to convert, at two locations in symmetry with respect to the axis of the first member, the forward movement of the first member relative to the sleeve into forward movement of the second member away from the first member. This makes the operation smoother and improves the rotational balance of the apparatus.

It is also preferable to position the steps of the cam symmetrically with respect to the pin.

A preferred embodiment of the present invention will be described in detail with reference to the accompanying drawings, in which:
Fig. 1 is a side view partially in cross section of a borer according to the present invention;

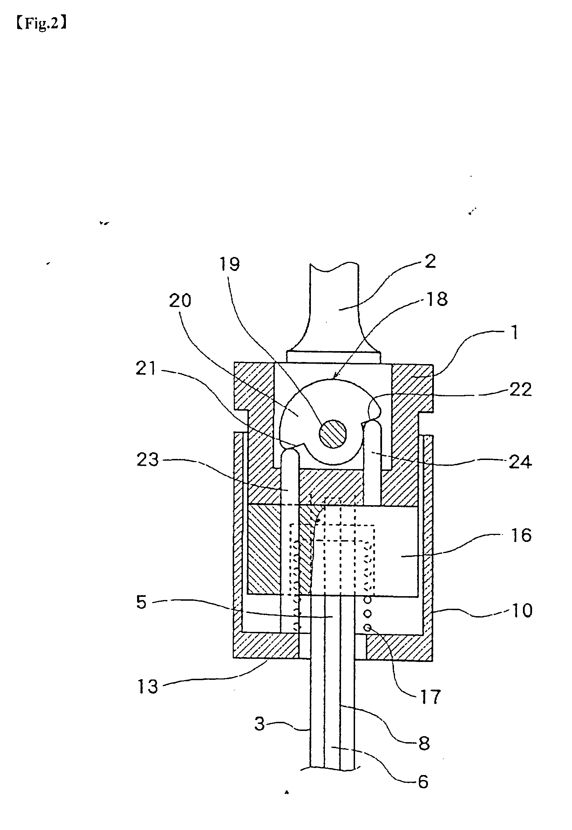

Fig. 2 is a cross section taken along line A-A of Fig. 1;
Figs. 3 and 4 are views similar to Figs. 1 and 2, but showing how to bore with the borer embodying the present invention.

With reference to the drawings, the borer embodying the present invention includes a shank 2 coupled to a rotating drive shaft (not shown). An upper or a first annular member 1 is fixed coaxially to the lower end of the shank 2. A drill spindle 3 is fixed at its upper end coaxially to the annular member 1. The spindle 3 has drill edge 4 at its lower end, which are the same as a known drill for drilling an ordinary straight hole.

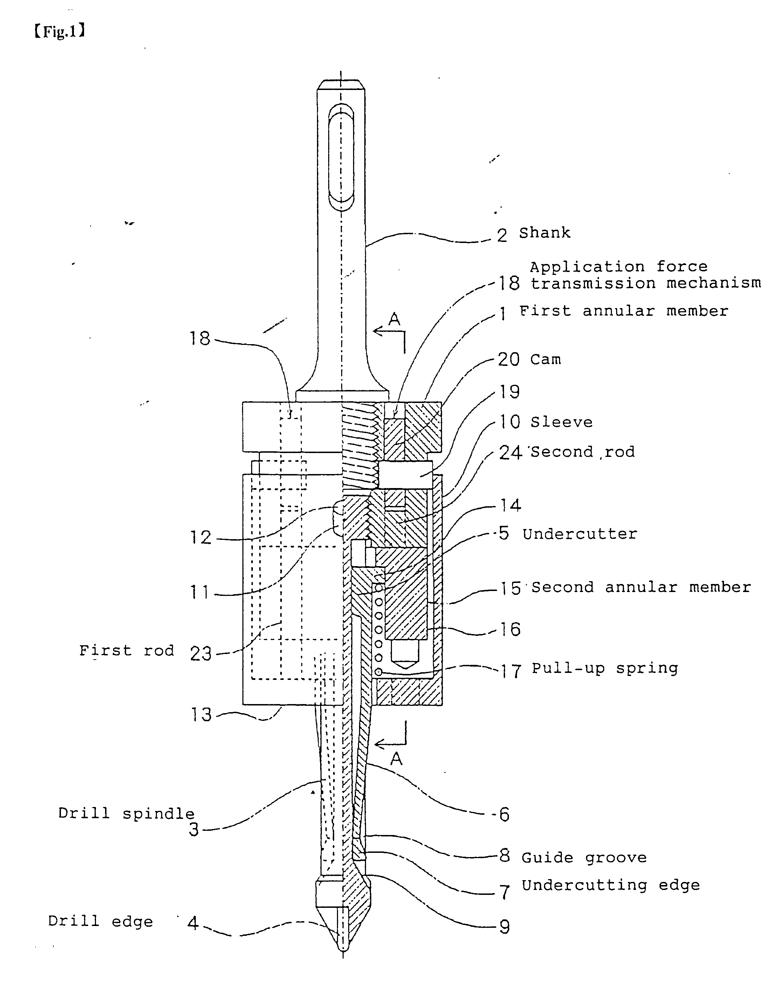

The drill spindle 3 has a pair of axial guide grooves 8 formed on its outer surface. An undercutter 5 engages with each of the grooves 8 slidably within a predetermined range therealong. The undercutter 5 includes a lower blade 6 having proper resiliency. An undercuting edge 7 is formed at the lower end of the blade 6. The bottom side of each groove 8 terminates at its lower end in a slope 9 inclined outward. Normally, as shown in Fig. 1, the undercutting edge 7 is retracted within the groove 8.

A sleeve 10 has an open upper end, and can telescopically slide on a lower portion of the annular member 1. The sleeve 10 also has a pair of axial slots 11 (only one shown) formed through its cylindrical wall. A pair of stoppers or radial pins 12 (only one shown) are fixed to the side wall of the annular member 1, and each engage slidably with one of the slots 11. The sleeve 10 includes an inner flange or lower end wall 13 having a center hole, through which the spindle 3 and undercutters 5 extend.

A lower or a second annular member 15 is positioned and can reciprocate coaxially between the upper annular member 1 and the sleeve end wall 13. The lower member 15 includes an inner flange formed at its upper end and a skirt or lower peripheral portion 16. The flange movably surrounds the spindle 3, and rests on or engages with the upper end portions 14 of the undercutters 5.

A pull- up spring 17 surrounds the undercutters 5 and spindle 3 between the sleeve end wall 13 and the undercutter end portion 14. The spring 17 biases or urges the undercutters 5 and the lower annular member 15 upward relatively to the sleeve 10, upper annular member 1 and spindle 3. Normally, the annular members 1 and 15 abut on each other, and the undercutting edge 7 are retracted in the guide grooves 8.

The upper annular member 1 has a pair of axially extending spaces formed therein. A radial pin 19 extends through each of the spaces, and is fixed to the upper member 1. A pair of application force transmission mechanisms 18 is provided to link the sleeve 10 and lower annular member 15 together. The transmission mechanisms 18 each include a cam 20 supported rotatably on the pin 19 in one of the spaces. The cam 20 has a pair of steps 21 and 22 facing downward on both sides of the associated pin 19. The steps 21 and 22 engage with the upper ends of impact transmission rods 23 and 24 respectively, which extend axially of the borer. The first or the longer rod 23 extends through part of the upper annular member 1 and through the lower member 15, and abuts at its lower end on the sleeve end wall 13. The second or the shorter rod 24 extends through part of the upper member 1, and abuts at its lower end on the upper surface of the lower member 15.

Normally, the lower annular member 15 is biased upward on the lower surface of the upper member 1. This lifts the shorter rods 24, turning the cams 20 to push down the longer rods 23.

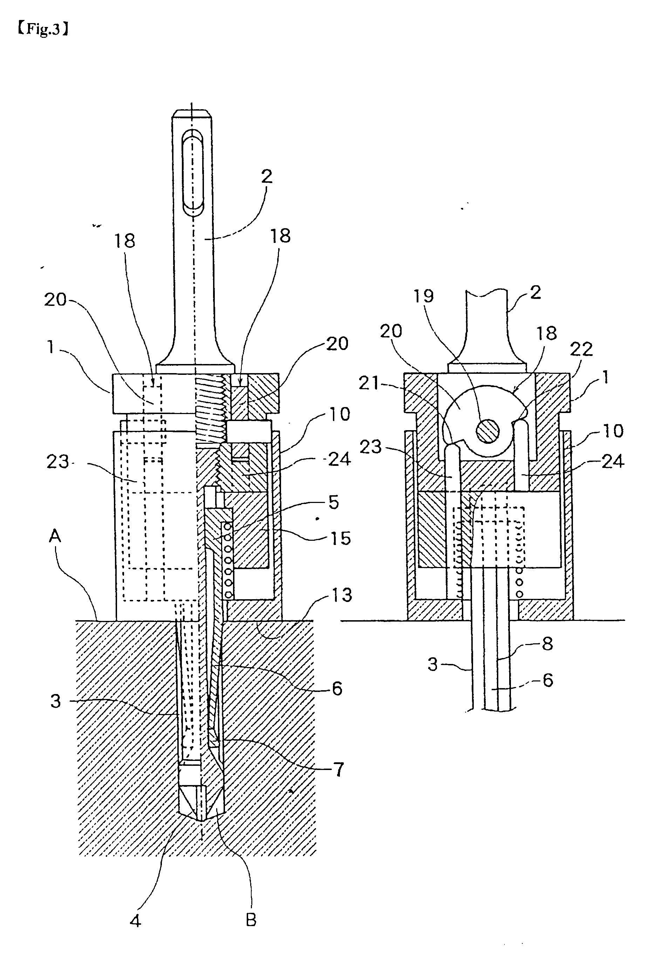

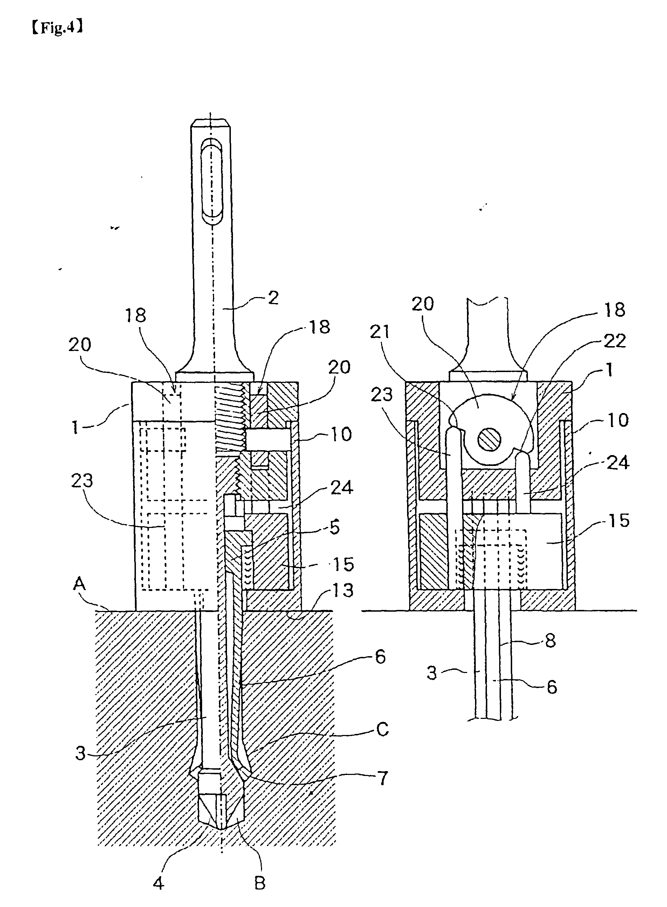

The operation of the borer will be explained with reference to Figs. 3 and 4.

With reference to Fig. 3, the borer is rotated and pushed down against concrete A, so that the drilling edge 4 drill a straight hole B in the concrete. When the hole B has reached the predetermined depth with the sleeve end wall 13 abutting on the upper surface of the concrete A, the sleeve 10 and the longer rods 23 stop lowering.

With reference to Fig. 4, the borer is kept rotating and being pushed down after the sleeve 10 stops lowering. As a result, the drill spindle 3 and the upper annular member 1 move down relatively to the sleeve 10 and the longer rods 23, while the drilling teeth 4 keep drilling the hole B. Consequently, the longer rods 23 push the cam steps 21, turning the cams 20 to lower the shorter rods 24. This lowers the lower annular member 15 together with the undercutters 5 against the force of the spring 17 relatively to the upper member 1 and the spindle 3. The undercutting edge 7 slide down along the spindle groove slopes 9, and protrude outward from the spindle 3 to cut the cylindrical wall of the drilled hole B.

When the skirt 16 of the lower annular member 15 has reached the sleeve end wall 13, the undercutters 5 stop lowering, with their edge 7 positioned at the most protruded points on the spindle 3. This completes the cutting of a conical undercut space C in the cylindrical wall of the hole B. Thus conical wall of the space C widens downward.

Thereafter, when the borer is released from the pushing down force, the spring 17 lifts the undercutters 5 and the lower annular member 15. As a result, the sleeve 10 returns to its original position, and the undercutting edges 7 retract from the slopes 9 into the guide grooves 8. Then, the borer is lifted to pull the spindle 3 out of the hole B. This completes the boring operation.

The present invention requires at least one application force transmission mechanism for converting the downward movement of the upper annular member relative to the stopped sleeve into the downward movement of the undercutters relative to the spindle during the boring operation. The transmission mechanism is constituted by each of the cams and the associated rods. Consequently, the transmission mechanism needs only a small number of parts. In addition, the backlashes between parts can be reduced and can accurately transmit the application force. Therefore, when the present invention is applied to a hammer drill or the like, it can, always with the same cutting stroke, drill holes having an undercut space efficiently in a simple manner.

By arranging the two transmission mechanisms symmetrically with respect to the axis of the borer, it is possible to improve the borer operation smoothness. It is also possible to improve the borer rotation balance and reduce the borer instability, so that efficient boring can be made by high speed rotation.

The steps of each cam are symmetric with respect to the pin supporting it. As a result, the cutting stroke of the undercutting edge can be secured irrespective of the properties of the object or material to be cut. Consequently, the high cutting performance of the undercutting edge can be obtained.

## Claims

1. Apparatus for drilling an undercut hole comprising:
a shank (2);
a first annular member (1) fixed at its rear end coaxially to the shank (2);
a stop member (12) fixed to the periphery of the first member (1);
a sleeve (10) in telescopic engagement with the first member and having an axial slot (11) in slidable engagement with the stop member (12), and having an inner flange (13) forward from the first member (1);
a drill spindle (3) fixed coaxially to the front end of the first member (1) and extending through the sleeve flange (13);
an undercut bit (5) slidably engaged with the side wall of the spindle (3) through the sleeve flange (13);
a second annular member (15) positioned coaxially between the first member (1) and the sleeve flange (13) and between the cylindrical wall of the sleeve (10) and the spindle (3), the annular member (15) engaging with the undercut bit (5) to axially move therewith;
a spring (17) interposed between the sleeve flange (13) and either of the undercut bit (5) and the second member (15) to bias the undercut bit (5) and the second member (15) rearwardly; and
at least one force transmission mechanism (18) characterized in that the force transmission mechanism comprises
a pin (19) fixed to the first member (1), perpendicular to the axis thereof;
a cam (20) rotatable on the pin (19) and having a pair of opposed downwardly facing shoulders (21,22);
a first rod (23) extending axially through the second member (15) to abut at its rear end one shoulder (21) and at its front end the sleeve flange (13); and
a second rod (24) extending axially of the first member (1) to abut at its rear end the other shoulder (22) and at its front end the second member (15).

2. Apparatus according to claim 1, comprising a pair of force transmission mechanisms (18) arranged symmetrically with respect to the longitudinal axis of the first member (1).

3. Apparatus according to claim 1 or claim 2, wherein the shoulders (21,22) are positioned symmetrically with respect to the pin (19).

## Patentansprüche

1. Vorrichtung zum Bohren eines Unterschnittloches, die umfaßt:
einen Schaft (2);
ein erstes ringförmiges Element (1), das mit seinem hinteren Ende koaxial am Schaft (2) befestigt ist;
ein Anschlagelement (12), das am Umfang des ersten Elements (1) befestigt ist;
eine Hülse (10), die teleskopartig mit dem ersten Element in Eingriff ist und einen axialen Schlitz (11), der gleitend mit dem Anschlagelement (12) in Eingriff ist, und einen inneren Flansch (13) aufweist, der vor dem ersten Element (1) angeordnet ist;
eine Bohrspindel (3), die koaxial am Vorderende des ersten Elements (1) befestigt ist und sich durch den Hülsenflansch (13) erstreckt;
einen Unterschnitteinsatz (5) der gleitend mit der Seitenwand der Spindel (3) über den Hülsenflansch (13) in Eingriff ist;
ein zweites ringförmiges Element (15) das koaxial zwischen dem ersten Element (1) und dem Hülsenflansch (13) und zwischen der zylindrischen Wand der Hülse (10) und der Spindel (3) angeordnet ist, wobei das ringförmige Element (15) mit dem Unterschnitteinsatz (5) in Eingriff ist, um sich mit diesem axial zu bewegen;
eine Feder (17), die zwischen dem Hülsenflansch (13) und dem Unterschnitteinsatz (5) und/oder dem zweiten Element (15) eingesetzt ist, um den Unterschnitteinsatz (5) und das zweite Element (15) nach hinten vorzubelasten; und
wenigstens einen Kraftübertragungsmechanismus (18),
dadurch gekennzeichnet, daß der Kraftübertragungsmechanismus umfaßt:
einen Stift (19), der am ersten Element (1) senkrecht zur dessen Achse befestigt ist;
einen Nocken (20), der drehbar am Stift (19) angeordnet ist und zwei gegenüberliegende nach unten weisende Schultern (21, 22) aufweist;
eine erste Stange (23), die sich axial durch das zweite Element (15) erstreckt, um mit ihrem hinteren Ende an einer Schulter (21) und mit ihrem vorderen Ende am Hülsenflansch (13) anzuliegen; und
eine zweite Stange (24), die sich axial zum ersten Element (1) erstreckt, um mit ihrem hinteren Ende an der anderen Schulter (22) und mit ihrem vorderen Ende am zweiten Element (15) anzuliegen.

2. Vorrichtung nach Anspruch 1, die zwei Kraftübertragungsmechanismen (18) umfaßt, die symmetrisch bezüglich der Längsachse des ersten Elements (1) angeordnet sind.

3. Vorrichtung nach Anspruch 1 oder Anspruch 2, bei der die Schultern (21, 22) symmetrisch bezüglich des Stifts (19) angeordnet sind.

## Revendications

1. Appareil pour creuser un trou à contre-dépouille, comprenant :
- une queue (2) ;
- un premier élément annulaire (1) fixé coaxialement, à son extrémité arrière, à la queue (2) ;
- un élément de butée (12) fixé à la périphérie du premier élément (1) ;
- un manchon (10) qui est accouplé de manière télescopique au premier élément, qui présente une fente axiale (11) accouplée par coulissement à l'élément de butée (12), et qui comporte une collerette intérieure (13) située à l'avant par rapport au premier élément (1) ;
- une broche de perçage (3) qui est fixée coaxialement à l'extrémité avant du premier élément (1) et qui traverse la collerette de manchon (13) ;
- une mèche pour contre-dépouille (5) accouplée par coulissement à la paroi latérale de la broche (3) à travers la collerette de manchon (13) ;
- un second élément annulaire (15) placé coaxialement entre le premier élément (1) et la collerette de manchon (13) et entre la paroi cylindrique du manchon (10) et la broche (3), cet élément annulaire (15) étant accouplé à la mèche pour contre-dépouille (5) pour se déplacer axialement avec elle ;
- un ressort (17) placé entre la collerette de manchon (13), d'une part, et la mèche pour contre-dépouille (5) et le second élément (15), d'autre part, pour contraindre ladite mèche (5) et ledit second élément (15) vers l'arrière ; et
- au moins un mécanisme de transmission de force (18),
caractérisé en ce que le mécanisme de transmission de force comprend :
- un axe (19) fixé au premier élément (1), perpendiculairement à l'axe de celui-ci ;
- une came (20) apte à tourner sur l'axe (19) et pourvue de deux épaulements opposés (21, 22) dirigés vers le bas ;
- une première tige (23) qui s'étend axialement à travers le second élément (15) de manière à buter avec son extrémité arrière contre un épaulement (21) et avec son extrémité avant contre la collerette de manchon (13) ; et
- une seconde tige (24) qui s'étend axialement par rapport au premier élément (1) de manière à buter avec son extrémité arrière contre l'autre épaulement (22) et avec son extrémité avant contre le second élément (15).

2. Appareil selon la revendication 1, comprenant deux mécanismes de transmission de force (18) disposés symétriquement par rapport à l'axe longitudinal du premier élément (1).

3. Appareil selon la revendication 1 ou 2, dans lequel les épaulements (21, 22) sont placés symétriquement par rapport à l'axe (19).
